# EUROPEAN PATENT APPLICATION

(11) **EP 4 712 233 A1**
(43) Date of publication of application: **18.03.2026**
(21) Application number: 25199473.7
(22) Date of filing: 01.09.2025
(51) Int. Cl.: H01M 50/213, H01M 50/262

(54) **BATTERY CELL HOLDER AND BATTERY PACK**

(30) Priority: 13.09.2024 KR 20240125942
(71) Applicant: SAMSUNG SDI CO., LTD., Yongin-si, Gyeonggi-do 17084 (KR)
(72) Inventor: PARK, Sanghun, 17084 Yongin-si (KR)
(74) Representative: Marks & Clerk LLP

(57) **Abstract**

A battery cell holder for accommodating a battery cell includes: an upper cover configured to extend around an upper portion of a battery cell while exposing a first electrode terminal of the battery cell; and a lower cover configured to extend around a lower portion of the battery cell while exposing a second electrode terminal of the battery cell, the lower cover and the upper cover being coupled to each other. A pair of parting sides of the upper cover and the lower cover that contact each other when the upper cover and the lower cover are coupled together extend diagonally.

## Description

### BACKGROUND

### 1. Field

Aspects of embodiments of the present disclosure relate to a battery cell holder and a battery pack.

### 2. Description of the Related Art

A battery pack including secondary batteries supplies power by interconnecting multiple battery cells, with the number and connection configuration of the battery cells being designed based on the device to be applied to the battery pack. When a battery pack is formed with cylindrical secondary batteries, the cylindrical secondary batteries generally require a fixing device, such as a holder, due to their shape to maintain the arrangement of the battery cells. Hence, forming the battery pack with cylindrical secondary batteries requires the manufacture of different sizes of fixing devices depending on the number of batteries to be assembled together.

### SUMMARY

Embodiments of the present disclosure provide a battery cell holder and a battery pack, and more particularly a battery cell holder and a battery pack in which some parting sides at where upper and lower covers contact each other extend diagonally, e.g. are formed as diagonal lines.

In accordance with an aspect of the present disclosure, there is provided a battery cell holder for accommodating, e.g. mounting, a battery cell therein which includes: an upper cover configured to extend, e.g. wrap, around an upper portion of a battery cell while exposing a first electrode terminal of the battery cell; and a lower cover configured to extend, e.g. wrap, around a lower portion of the battery cell while exposing a second electrode terminal of the battery cell, the lower cover and the upper cover being configured to be coupled to each other. A pair of parting sides of the upper cover and the lower cover that contact each other when the upper cover and the lower cover are coupled together extend diagonally, e.g. are formed as diagonal lines.

Another pair of parting sides of the upper cover and the lower cover, e.g. on adjacent faces of the battery cell holder to the faces having diagonal parting sides, that contact each other when the upper cover and the lower cover are coupled together may extend horizontally.

The battery cell holder may have a joint between the upper cover and the lower cover formed at each of the other parting sides, i.e. those formed as horizontal lines.

The upper cover may include a coupling projection, e.g. at the joint between the upper cover and the lower cover, extending toward the lower cover.

The lower cover may have a coupling groove configured to receive the coupling projection.

The coupling groove may be larger in size than the coupling projection.

At least one of the upper cover and the lower cover may have a lateral side formed of faces having different slopes with respect to each other.

At least one of the upper cover and the lower cover may include a protrusion formed inwardly to prevent separation of the battery cell therefrom.

At least one of the upper cover and the lower cover may have a hollow triangular corner.

In accordance with another aspect of the present disclosure, there is provided a battery pack which includes: a plurality of battery cells; and a plurality of battery cell holders respectively accommodating the battery cells therein. Each of the battery cell holders includes: an upper cover extending around an upper portion of a corresponding one of the battery cells while exposing a first electrode terminal therethrough; and a lower cover extending around a lower portion of the corresponding one of the battery cells while exposing a second electrode terminal therethrough, the lower cover and the upper cover being coupled to each other. A pair of parting sides of the upper cover and the lower cover that contact each other when the upper cover and the lower cover are coupled together extend diagonally.

Another pair of parting sides of the upper cover and the lower cover that contact each other when the upper cover and the lower cover are coupled together may extend horizontally.

At least a portion of each of the parting sides of the upper cover and the lower cover may extend horizontally.

The upper cover may include a coupling projection extending toward the lower cover.

The lower cover may have a coupling groove configured to receive the coupling projection.

The coupling groove may be larger in size than the coupling projection.

A portion of a lateral side of the upper cover of one of the battery cell holders may contact a portion of a later side of the lower cover of an adjacent one of battery cell holders.

At least one of the upper cover or the lower cover of one of the battery cells holders may have a side contacting another one of the battery cell holders formed of a plurality of faces having different slopes with respect to each other.

The plurality of battery cell holders may be fastened together by close contact by each of the battery cell holders having a plurality of faces having different slopes at the contact side between adjacent ones of the battery cell holders.

At least one of the upper cover or the lower cover may include a protrusion formed inwardly of the battery cell holder to prevent separation of the battery cell therefrom.

At least one of the upper cover or the lower cover may have a hollow triangular corner.

At least some of the above and other features of the invention are set out in the claims.

### BRIEF DESCRIPTION OF THE DRAWINGS

The following accompanying drawings illustrate embodiments of the present disclosure and are provided to further describe aspects and features of the present disclosure together with the detailed description of the present disclosure. Thus, the present disclosure should not be construed as being limited to the drawings, in which:
FIG. 1A is a top perspective view of a cylindrical secondary battery;
FIG. 1B is a cross-sectional view of the cylindrical secondary battery shown in FIG. 1A;
FIG. 2A is an exploded view of a battery cell coupled to a battery cell holder according to an embodiment of the present disclosure;
FIG. 2B is an assembled view of the battery cell holder shown in FIG. 2A;
FIGS. 3A to 3D are side views of the battery cell holder when viewed from four different directions according to the embodiment of the present disclosure;
FIG. 4 is a top view of the battery cell holder shown in FIGS. 3A to 3D; and
FIGS. 5A and 5B are views of a battery pack according to an embodiment of the present disclosure.

### DETAILED DESCRIPTION

One or more embodiments of the present disclosure will be described herein in more detail with reference to the accompanying drawings. Prior to the description, it is noted that the terms or words used in the present disclosure and the appended claims and equivalents thereof should not be construed as being limited to common or dictionary meanings but instead should be understood to have meanings and concepts in agreement with the scope of the present disclosure based on the principle that an inventor may define the concept of each term suitably in order to describe his/her own invention in the best way possible. Accordingly, because one or more embodiments described in the present disclosure and the configurations or arrangements illustrated in the drawings are only an example of the present disclosure and they do not cover all the technical ideas and aspects of one or more embodiments of the present disclosure, it should be understood that one or more suitable changes and modifications may be made at the time of filing this application.

It will be further understood that the terms "has/includes" and/or "having/including" if (e.g., when) used herein, specify the presence of stated features, integers, steps, operations, elements, components, and/or groups thereof, but do not preclude the presence or addition of one or more other features, integers, steps, operations, elements, components, and/or groups thereof.

In the present disclosure, it will be understood that the term "comprise(s)/comprising," "include(s)/including," or "have/has/having" specifies the presence of stated features, integers, steps, operations, elements, and/or components, but do not preclude the presence or addition of one or more other features, integers, steps, operations, elements, components, and/or groups thereof. Additionally, the terms "comprise(s)/comprising," "include(s)/including," "have/has/having" or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

In order to facilitate understanding of the present disclosure, the accompanying drawings are not drawn to scale, and the dimensions of one or more components may be exaggerated. It should be noted that the same reference numerals are designated to substantially the same components in different embodiments.

Reference to two compared elements, features, and/or the like as being "the same" indicates that they are "substantially the same". Therefore, the phrase "substantially the same" may include a deviation that is considered low in the art, for example, a deviation of 5% or less. The uniformity of any parameter in a given region may refer to that it is uniform (e.g., substantially uniform) from an average perspective.

Although the terms, such as "first" and/or "second", are used to describe one or more components, these components are not limited by these terms. These terms are only used to distinguish one component from another component. Thus, unless specifically stated to the contrary, a first component may be termed a second component without departing from the scope of the present disclosure.

Throughout the specification, unless otherwise stated, each element may be singular or plural.

Arrangement of any component "above (or below)" or "on (or under)" a component may refer to that any component is disposed in contact with the upper (or lower) surface of the component, as well as that other components may be between the element and any element on (or under) the element.

It will be understood that, if (e.g., when) a component is referred to as being "connected", "coupled", or "joined" to another component, not only may it be directly "connected", "coupled", or "joined" to the other element, but also may it be indirectly "connected", "coupled", or "joined" to the other element with other elements interposed therebetween.

As used herein, the term "and/or" includes any and all combinations of one or more of the associate listed items. The use of "may" if (e.g., when) describing embodiments of the present disclosure relates to "one or more embodiments of the present disclosure". Expressions, such as "at least one" and "one or more", preceding a list of elements modify the entire list of elements and do not modify the individual elements in the list.

Throughout the specification, if (e.g., when) "A and/or B" is stated, it refers to A, B, or A and B, unless otherwise stated. Also, if (e.g., when) "C to D" is stated, it refers to C or more and D or less, unless specifically stated to the contrary.

If (e.g., when) the phrase, such as "at least one of A, B, and C", "at least one of A, B, or C", "at least one selected from the group of A, B, and C", or "at least one selected from among A, B, and C", is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms "first," "second," "third," and/or the like may be used herein to describe one or more elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, a first component, a first region, a first layer, or a first section discussed below may be termed a second element, a second component, a second region, a second layer, or a second section without departing from the scope of the present disclosure.

For ease of explanation in describing the relationship of one element or feature to another element(s) or feature(s) as illustrated in the drawings, spatially relative terms, such as "beneath", "below", "lower", "above", and "upper", may be used herein. It will be understood that spatially relative positions are intended to encompass different directions of the device in use or operation in addition to the direction depicted in the drawings. For example, if (e.g., when) the device in the drawings is turned over, any element described as being "below" or "beneath" another element may then be oriented "above" or "over" another element. Therefore, the term "below" may encompass both upward and downward directions.

The terminology used herein is for the purpose of describing one or more embodiments of the present disclosure and is not intended to limit the scope of the present disclosure.

Unless otherwise defined, all terms (including technical and scientific terms) used herein have substantially the same meaning as generally understood by one of ordinary skill in the art to which the present disclosure belongs. It will be further understood that terms, such as those defined in dictionaries that are generally available or generally used, should be interpreted as having a meaning that is consistent with their meaning in the context of the relevant art and will not be interpreted in an idealized or overly formal sense unless expressly so defined herein.

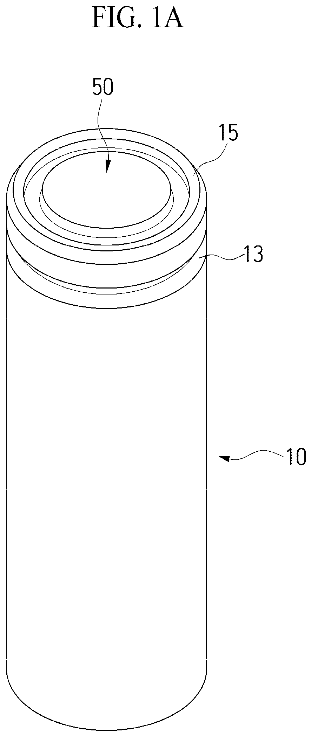

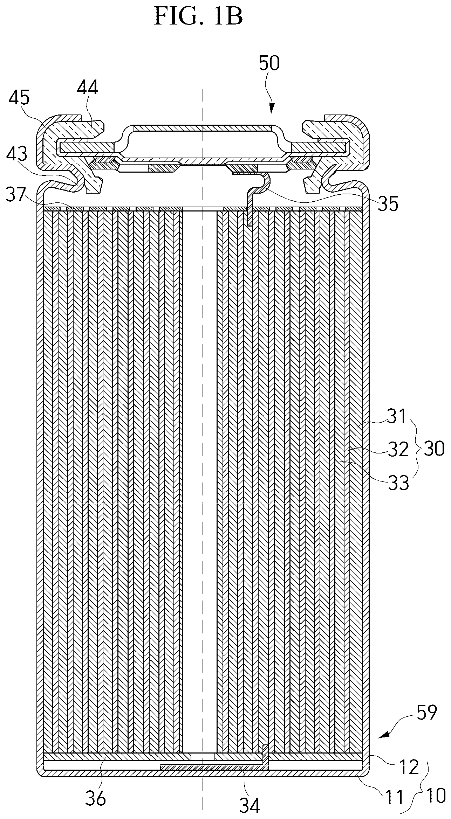

FIG. 1A is an upper perspective view of a cylindrical secondary battery. FIG. 1B is a cross-sectional view the cylindrical secondary battery shown in FIG. 1A.

Referring to FIGS. 1A and 1B, the cylindrical secondary battery may include an electrode assembly 30, a case 10 that accommodates the electrode assembly 30 and an electrolyte therein, a cap assembly 50 that is connected to an opening of the case 10 and that seals the case 10, and an insulating plate 37 between the electrode assembly 30 and the cap assembly 50 within the case 10.

The electrode assembly 30 may include a separator 32 and a first electrode 33 and the second electrode 31 with the separator 32 therebetween, which may be wound together in a jelly-roll form.

The first electrode 33 may include a first base and a first active material layer on the first base. A first lead tap 35 may extend from a first uncoated part of the first base at where the first active material layer is not disposed. The first lead tap 35 may be electrically connected to the cap assembly 50.

The second electrode 31 may include a second base and a second active material layer on the second base. A second lead tap 34 may extend from a second uncoated part of the second base at where the second active material layer is not disposed. The second lead tap 34 may be electrically connected to the case 10. The first lead tap 35 and the second lead tap 34 may extend in opposite (e.g., opposite facing) directions.

The first electrode 33 may act as a positive electrode. In such an embodiment, the first base may include an aluminum foil, for example. The first active material layer may include a transition metal oxide, for example. The second electrode 31 may act as a negative electrode. In such an embodiment, the second base may include a copper foil and/or nickel foil, for example. The second active material layer may include graphite, for example.

The separator 32 may permit movement of lithium ions (e.g., a flow of lithium ions) while preventing a short-circuit of the first electrode 33 and the second electrode 31. The separator 32 may include a polyethylene film, a polypropylene film, and/or a polyethylene-polypropylene film, for example.

The case 10 may accommodate the electrode assembly 30 and an electrolyte and may form or provide an external form of the battery along with the cap assembly 50. The case 10 may include a body part 12 having a substantially cylindrical shape and a bottom part 11 connected to (or extending from) one side of the body part 12. A beading part 43 that has been deformed inwardly toward the inside of the body part 12 may be formed in the body part 12. A crimping part 45 that has been bent inwardly toward the inside of the body part 12 may be at an end of the body part 12 at the open side.

The beading part 43 may suppress movement (or reduce a degree or occurrence of a movement) of the electrode assembly 30 within the case 10 and may facilitate connection of a gasket 44 and the cap assembly 50. The crimping part 45 may firmly fix the cap assembly 50 by pressurizing an edge of the cap assembly 50 through the gasket 44. The case 10 may be made of iron plated with nickel, for example.

The cap assembly 50 may seal the case 10 by being fixed to the inside of the crimping part 45 through the gasket 14. The cap assembly 50 may include a cap-up part, a safety vent, a cap-down part, an insulating member, and a sub-plate, but embodiments of the present disclosure are not limited to such examples. The cap assembly 50 may be suitably deformed.

The cap-up part may be at the top of the cap assembly 50. The cap-up part may include a terminal part that upward convexly protrudes and that is connected to an external circuit. An output to discharge a gas around the terminal part may be in the cap-up part.

The safety vent may be under the cap-up part. The safety vent may include a protruding part that downward convexly protrudes and that is connected to the sub-plate, and at least one notch around the protruding part.

If (e.g., when) a gas is generated due to over-charging and/or an abnormal operation of the secondary battery, the protruding part may be upward deformed by the pressure of the gas and separated from the sub-plate. Furthermore, the safety vent may be cut along the notch. The cut safety vent may prevent the explosion (or reduce a degree or occurrence of the explosion) of the secondary battery by discharging the gas to the outside.

The cap-down part may be under the safety vent. A first opening to expose the protruding part of the safety vent and a second opening to discharge a gas may be in the cap-down part. The insulating member may be between the safety vent and the cap-down part and may insulate the safety vent and the cap-down part.

The sub-plate may be under the cap-down part. The sub-plate may be fixed to the bottom of the cap-down part in order to close the first opening of the cap-down part. The protruding part of the safety vent may be fixed to the sub-plate. The first lead tap 35 that has been drawn out of the electrode assembly 30 may be fixed to the sub-plate. Accordingly, the cap-up part, the safety vent, the cap-down part, and the sub-plate may be electrically connected to the first electrode 33 of the electrode assembly 30.

The insulating plate 37 may be disposed or provided to adjoin the electrode assembly 30 under the beading part 43. A tap opening to withdraw the first lead tap 35 may be provided in the insulating plate 37. The cap assembly 50 that has been electrically connected to the first electrode 33 by the first lead tap 35 may face the electrode assembly 30 with the insulating plate 37 therebetween. The cap assembly 50 may maintain or provide the state in which the cap assembly 50 has been insulated from the electrode assembly 30 by the insulating plate 37. The cylindrical secondary battery may include another insulating plate 36 for insulation between the electrode assembly 30 and the bottom part 11 of the case 10.

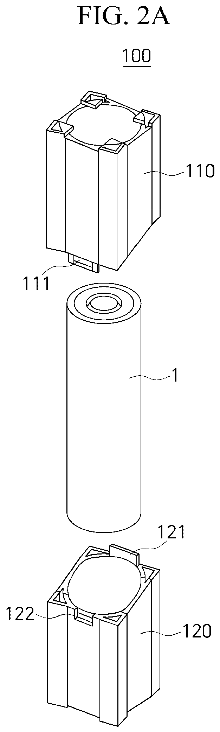

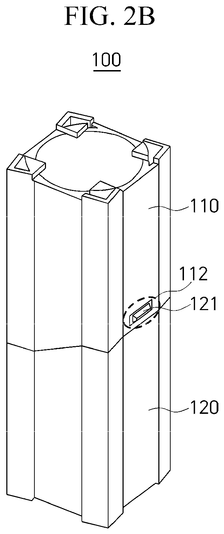

FIG. 2A is an exploded view of a battery cell coupled to a battery cell holder 100 according to an embodiment of the present disclosure. FIG. 2B is an assembled view of the battery cell holder 100 shown in FIG. 2A.

Referring to FIGS. 2A and 2B, the battery cell holder 100, according to an embodiment of the present disclosure, includes an upper cover 110 and a lower cover 120. The battery cell holder 100 may mount (or may accommodate) a battery cell 1 therein.

The upper cover 110 wraps around (e.g., extends around a periphery of) the upper portion of the battery cell 1 while exposing a first electrode terminal of the battery cell 1.

The lower cover 120 wraps around (e.g., extends around a periphery of) the lower portion of the battery cell 1 while exposing a second electrode terminal of the battery cell 1. The lower cover 120 is coupled to the upper cover 110.

The upper cover 110 may include a coupling projection 111 and a coupling groove 112 and the lower cover 120 may include a coupling projection 121 and a coupling groove 122 to couple the upper and lower covers 110, 120 together as illustrated in, for example, FIG. 2B. In an embodiment, the coupling projections 111, 121 may each have a hook shape.

The specific configuration of the battery cell holder 100 according to the embodiment of the present disclosure will be described below with reference to the drawings.

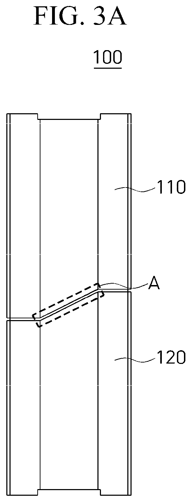

FIGS. 3A to 3D are side views of the battery cell holder 100 shown in FIGS. 2A and 2B when viewed from four different directions.

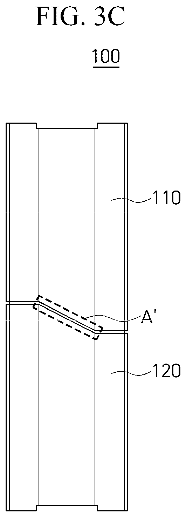

Referring to FIGS. 3A and 3C, when the battery cell holder 100 is viewed from the side, some of the parting sides at where the upper cover 110 and the lower cover 120 contact each other may be formed as diagonal lines (e.g., may extend in a vertically diagonal direction). In FIG. 3A, side A is formed as a diagonal line. In the face shown in FIG. 3C, which is directly opposite to the face shown in FIG. 3A, side A' is formed as a diagonal line in a direction opposite to (e.g., vertically opposite to or mirrored) the diagonal line in the side A.

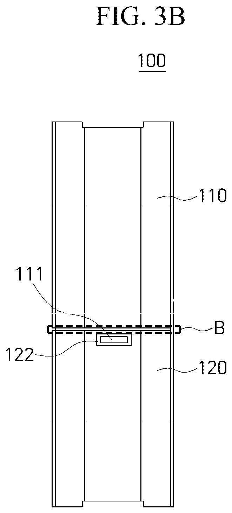

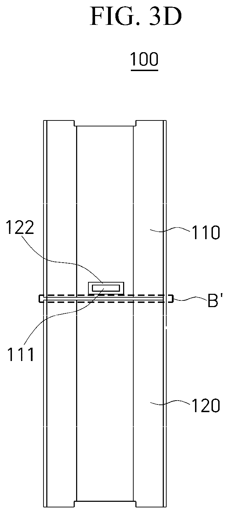

FIGS. 3B and 3D illustrate faces adjacent to the faces shown in FIGS. 3A and 3C. As can be seen in FIGS. 3B and 3D, when the battery cell holder 100 is viewed from the side, parting sides B and B', which are other than the parting sides A and A', are formed as horizontal lines rather than as diagonal lines. The parting side B shown in FIG. 3B has a lower height than the parting side B' shown in FIG. 3D due to the parting sides A and A' being formed as diagonal lines. The long side of the upper cover 110 and the short side of the lower cover 120 are shown in FIG. 3B, and the short side of the upper cover 110 and the long side of the lower cover 120 are shown in FIG. 3D.

A joint between the upper cover 110 and the lower cover 120 is formed at each of the parting sides B and B' formed as horizontal lines in FIGS. 3B and 3D. In

FIG. 3B, the joint between the upper cover 110 and the lower cover 120 is formed at the parting side B, and the upper cover 110 includes a coupling projection 111 at the joint between the upper cover 110 and the lower cover 120, and the lower cover 120 has a coupling groove 122 corresponding to the coupling projection 111 at the joint between the upper cover 110 and the lower cover 120. In FIG. 3D, the joint between the upper cover 110 and the lower cover 120 is formed at the parting side B', and the lower cover 120 includes a coupling projection 121 at the joint between the upper cover 110 and the lower cover 120, and the upper cover 110 has a coupling groove 112 corresponding to the coupling projection 121 at the joint between the upper cover 110 and the lower cover 120.

In an embodiment, the coupling grooves 112, 122 in the respective upper and lower covers 110, 120 may be larger in size than the corresponding coupling projections 111, 121. For example, because the coupling grooves 112, 122 are larger than the coupling projections 111, 121, the upper cover 110 and the lower cover 120 may be coupled together with some slack (or play) rather than being tight. Accordingly, the battery cell holder 100 may correct (or may accommodate) external dispersion that occurs during the manufacturing process of the battery cell 1. For example, if a battery cell 1 is manufactured slightly too tall due to an abnormality in the manufacturing process thereof and a battery cell holder is made such that its upper and lower covers are coupled tightly, the upper cover and lower cover may not be able to be coupled on the battery cell, making it difficult to mount that battery cell in the battery cell holder. However, the battery cell holder 100, according to an embodiment of the present disclosure, may mount the battery cell 1 therein even if it is somewhat larger in height because the upper cover 110 and the lower cover 120 may be coupled together with some slack.

The battery cell holder 100, according to an embodiment of the present disclosure, has a configuration in which some of the parting sides A, A' at where the upper cover 110 and the lower cover 120 contact each other are formed as diagonal lines. Therefore, each battery cell holder 100 may have a complementary support structure, which will be described in more detail later in conjunction with a battery pack according to an embodiment of the present disclosure.

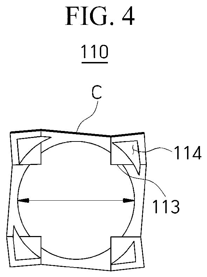

FIG. 4 is a top view of the battery cell holder 100 shown in FIGS. 3A to 3D.

FIG. 4 illustrates the battery cell holder 100 when viewed from above. In particular, FIG. 4 shows the upper cover 110 as viewed from above. The lower cover 120 is identical or substantially similar when viewed from below as well.

In an embodiment, the upper cover 110 (or the lower cover 120) may have an inner diameter that is greater than a maximum outer diameter of the battery cell 1. This allows the battery cell holder 100 to accommodate the battery cell 1.

In one embodiment, the battery cell holder 100 may include one or more protrusions 113 formed inwardly thereof to prevent separation of the battery cell 1 from the upper portion of the upper cover 110 (or the lower portion of the lower cover 120). FIG. 4 illustrates an embodiment in which four protrusions 113 are formed inwardly of the battery cell holder 100 to prevent separation of the battery cell 1.

In an embodiment, the upper cover 110 (or the lower cover 120) may have a hollow triangular corner 114 viewed from above (or below). The hollowness of the corner 114 prevents or reduces shrinkage when the upper cover 110 (or the lower cover 120) is formed by injection molding. Moreover, the corner 114 may also absorb a shock in the event of a shock to battery packs because it is hollow.

As illustrated in FIG. 4, the upper cover 110 may have, when the battery cell holder 100 is viewed from above, a side that comes into contact with another battery cell holder, for example, the side having a plurality of straight lines with different slopes. FIG. 4 illustrates the side C as coming into contact with another battery cell holder and as being formed of three straight lines (or faces) with different slopes. Similarly, the lower cover 120 may have, when the battery cell holder 100 is viewed from below, a side that comes into contact with another battery cell holder and is formed as a plurality of straight lines with different slopes.

The battery cell holder 100, according to an embodiment of the present disclosure, has sides that come into contact with other battery cell holders, and the sides are each formed as a plurality of straight lines with different slopes to maintain a strong mutual fastening force between battery cell holders constituting a battery pack. A specific description thereof will be given later in conjunction with a battery pack according to an embodiment of the present disclosure.

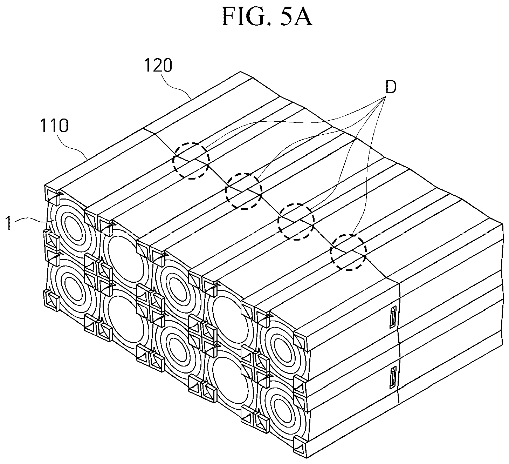

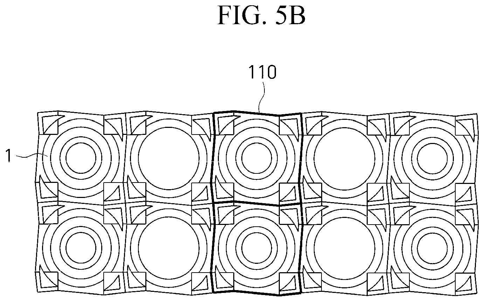

FIGS. 5A and 5B are views of a battery pack according to an embodiment of the present disclosure.

FIGS. 5A and 5B illustrate a battery pack formed by combination of a plurality of battery cell holders 100 equipped with (or accommodating) a plurality of battery cells 1.

In the battery pack, according to an embodiment of the present disclosure, with reference to areas D in FIG. 5A, the battery cell holders may be coupled together in a state in which, due to the parting sides being formed as diagonal lines, a portion of the long side of each upper cover 110 contacts a portion of the long side of an associated (or corresponding) lower cover 120. As described above, the joint between the upper cover 110 and the lower cover 120 at the parting sides is formed as horizontal lines adjacent to the parting sides formed as diagonal lines, and the lower portion of the long side of the upper cover 110 supports the joint between the upper cover 110 and the lower cover 120. Therefore, the plurality of battery cell holders 100 may have a complementary support structure, providing enhanced durability of the battery pack.

In the battery pack, according to an embodiment of the present disclosure, as can be seen from the contact side between the upper covers 110 in FIG. 5A, the plurality of battery cell holders 100 may be fastened together by close contact of a plurality of straight lines with different slopes of the contact side between the battery cell holders. As such, the battery pack can maintain a strong mutual fastening force between the battery cell holders 100 through the plurality of straight lines with different slopes of each side of each battery cell holder 100 in arrangement of multiple battery cells.

As is apparent from the above description, embodiments of the present disclosure provide a battery pack formed by connecting a plurality of unit holders, each capable of mounting (or configured to accommodate) one battery cell therein.

According to embodiments of the present disclosure, the durability of the battery pack may be improved by forming some of the parting sides that come into contact with the upper cover and the lower cover as diagonal lines and allowing each battery cell holder to have a complementary support structure.

According to embodiments of the present disclosure, because the upper cover and the lower cover are coupled together with some slack, the battery cell holder can correct external dispersion that may occur during the manufacturing process of the battery cell.

According to embodiments of the present disclosure, a strong mutual fastening force may be maintained between battery cell holders constituting the battery pack because the contact side between a battery cell holder and another battery cell holder is formed as a plurality of straight lines with different slopes.

## Claims

1. A battery cell holder for accommodating a battery cell therein, the battery cell holder comprising:
an upper cover configured to extend around an upper portion of a battery cell while exposing a first electrode terminal of the battery cell; and
a lower cover configured to extend around a lower portion of the battery cell while exposing a second electrode terminal of the battery cell, the lower cover and the upper cover being configured to be coupled to each other,
wherein a pair of parting sides of the upper cover and the lower cover that contact each other when the upper cover and the lower cover are coupled together extend diagonally.

2. The battery cell holder as claimed in claim 1, wherein another pair of parting sides of the upper cover and the lower cover that contact each other when the upper cover and the lower cover are coupled together extend horizontally.

3. The battery cell holder as claimed in claim 2, wherein at least a portion of each of the parting sides of the upper cover and the lower cover extend horizontally.

4. The battery cell holder as claimed in claim 1, 2 or 3, wherein the upper cover comprises a coupling projection extending toward the lower cover.

5. The battery cell holder as claimed in claim 4, wherein the lower cover has a coupling groove configured to receive the coupling projection.

6. The battery cell holder as claimed in claim 5, wherein the coupling groove is larger in size than the coupling projection.

7. The battery cell holder as claimed in any preceding claim, wherein at least one of the upper cover and the lower cover has a lateral side formed of faces having different slopes with respect to each other.

8. The battery cell holder as claimed in any preceding claim, wherein at least one of the upper cover and the lower cover comprises a protrusion formed inwardly to prevent separation of the battery cell therefrom.

9. The battery cell holder as claimed in any preceding claim, wherein at least one of the upper cover and the lower cover has a hollow triangular corner.

10. A battery pack comprising:
a plurality of battery cells; and
a plurality of battery cell holders according to any preceding claim respectively accommodating the battery cells therein.

11. The battery pack as claimed in claim 10, wherein a portion of a lateral side of the upper cover of one of the battery cell holders contacts a portion of a lateral side of the lower cover of an adjacent one of battery cell holders.

12. The battery pack as claimed in claim 10 or 11, wherein at least one of the upper cover or the lower cover of one of the battery cells holders has a side contacting another one of the battery cell holders formed of a plurality of faces having different slopes with respect to each other.

13. The battery pack as claimed in claim 12, wherein the plurality of battery cell holders are configured to be fastened together by close contact by each of the battery cell holders having a plurality of faces having different slopes at the contact side between adjacent ones of the battery cell holders.
